# EUROPÄISCHE PATENTANMELDUNG

(11) **EP 2 020 337 A2**
(43) Veröffentlichungstag der Anmeldung: **04.02.2009**
(21) Anmeldenummer: 08013319.2
(22) Anmeldetag: 24.07.2008
(51) Int. Cl.: B60R 5/04

(54) **Laderaumabdeckung für ein Kraftfahrzeug**

(30) Priorität: 02.08.2007 DE 102007038113
(71) Anmelder: BOS GmbH & Co. KG, 73760 Ostfildern (DE)
(72) Erfinder: Steigerwald, Thomas, Rochester Hills, MI 48306 (US); Uhazie, Michael, Oakland Township, MI 48363 (US)
(74) Vertreter: Patentanwälte Ruff, Wilhelm, Beier, Dauster & Partner

(57) **Zusammenfassung**

Eine Laderaumabdeckung für ein Kraftfahrzeug, mit einem flexiblen Flächengebilde, das an wenigstens einem Stirnendbereich mit jeweils einem sich quer zur Längsrichtung des Flächengebildes erstreckenden, formstabilen Halteprofil verbunden ist, das in fahrzeugfesten Halterungen lösbar angeordnet ist, ist bekannt. Erfindungsgemäß weist das Halteprofil stirnseitige Ausgleichselemente im Bereich der fahrzeugfesten Halterungen auf, durch die der wenigstens eine Stirnendbereich des Flächengebildes oder die Dimensionierung des Halteprofils in Querrichtung und/oder in Längsrichtung begrenzt verlagerbar sind. Einsatz für Personenkraftwagen.

## Beschreibung

Die Erfindung betrifft eine Laderaumabdeckung für ein Kraftfahrzeug mit einem flexiblen Flächengebilde, das an wenigstens einem Stirnendbereich mit jeweils einem sich quer zur Längsrichtung des Flächengebildes erstreckenden, formstabilen Halteprofil verbunden ist, das in fahrzeugfesten Halterungen lösbar angeordnet ist.

Laderaumabdeckungen, bei denen sich ein flexibles Flächegebilde zwischen zwei formstabilen Halteprofilen erstreckt, die jeweils mit den gegenüberliegenden Stirnendbereichen des flexiblen Flächengebildes verbunden sind, sind allgemein bekannt. Derartige Laderaumabdeckungen sind äußerst einfach aufgebaut und demzufolge kostengünstig. Sie werden mit ihren beiden Halteprofilen in fahrzeugseitige Halterungen eingesetzt, wobei die fahrzeugseitigen Halterungen für die gegenüberliegenden Halteprofile derart in Fahrzeuglängsrichtung zueinander beabstandet sind, dass das Flächengebilde in einer etwa horizontal aufgespannten und den Laderaum knapp unterhalb einer Fahrzeugbrüstung überspannenden Position aufgespannt ist. Fahrzeugseitige Toleranzen der Anordnung der Halterungen können dazu führen, dass ein Halteprofil an seinen gegenüberliegenden Seitenrändern, mit denen es in die fahrzeugseitigen Halterungen eingesetzt ist, nicht ausreichend sicher gehalten ist. Zudem können Toleranzen in Abständen der fahrzeugseitigen Halterungen zueinander in Fahrzeuglängsrichtung dazu führen, dass das Flächengebilde in aufgespanntem Abdeckzustand schlaff durchhängt. Das macht einen optisch schlechten Eindruck.

Aufgabe der Erfindung ist es, eine Laderaumabdeckung der eingangs genannten Art zu schaffen, die wenigstens teilweise einen Ausgleich von Toleranzen in der Anordnung der fahrzeugfesten Halterungen ermöglicht.

Diese Aufgabe wird dadurch gelöst, dass das Halteprofil stirnseitige Ausgleichselemente im Bereich der fahrzeugfesten Halterungen aufweist, durch die der wenigstens eine Stirnendbereich des Flächengebildes in Querrichtung und/oder in Längsrichtung begrenzt verlagerbar ist. Dadurch ist es möglich, Toleranzen in der Anordnung der fahrzeugfesten Halterungen in Fahrzeugquerrichtung und/oder in Fahrzeuglängsrichtung auszugleichen. So ist es zum einen möglich, in der Abdeckposition des Flächengebildes einen flächigen und ebenen, gespannten Zustand des Flächengebildes zu erreichen. Außerdem ist es möglich, durch die Ausgleichselemente das Halteprofil in seiner Längserstreckung, d.h. in Fahrzeugquerrichtung, in definierten Grenzen zu verändern, so dass das Halteprofil auch in fahrzeugfesten Halterungen, die einander gegenüberliegend einen etwas größeren Abstand aufweisen als andere fahrzeugfeste Halterungen, einen sicheren Sitz des Halteprofils in diesen Halterungen zu erreichen. Damit ist auch das Flächengebilde in Querrichtung verlagerbar, da es an dem Halteprofil gehalten ist. Die erfindungsgemäße Lösung ermöglicht entweder nur einen Toleranzausgleich in Fahrzeugquerrichtung oder in Fahrzeuglängsrichtung, oder einen Toleranzausgleich sowohl in Fahrzeugquerrichtung als auch in Fahrzeuglängsrichtung.

In Ausgestaltung der Erfindung sind den Ausgleichselementen jeweils Endanschläge sowie Federbelastungsmittel zugeordnet, die das zugeordnete Ausgleichselement in wenigstens einer Richtung mit Federkraft beaufschlagen und in unbelastetem Zustand an einem Endanschlag halten. Dadurch wird ein spielfreier Sitz der Halteprofile in den fahrzeugfesten Halterungen erzielt. Die Federbelastungsmittel ermöglichen die Spannung des Flächengebildes in seiner den Laderaum überdeckenden Funktionsposition.

In weiterer Ausgestaltung der Erfindung umfassen die Ausgleichselemente in Querrichtung des Flächengebildes eines Teleskop-Profilabschnitt. Die Teleskop-Profilabschnitte sind vorzugsweise koaxial in dem jeweiligen Halteprofil integriert.

In weiterer Ausgestaltung der Erfindung weisen die Ausgleichselemente in Längsrichtung des Flächengebildes einen stationär zu den fahrzeugfesten Halterungen gehaltenen Längsführungsabschnitt sowie einen am Stirnendbereich fest angeordneten und relativ zu dem Längsführungsabschnitt begrenzt längsbeweglichen Schlittenabschnitt auf. Der begrenzt längsbewegliche Schlittenabschnitt ermöglicht den Toleranzausgleich in Fahrzeuglängsrichtung, d.h. in Längsrichtung des Flächengebildes.

In weiterer Ausgestaltung der Erfindung sind die Ausgleichselemente für jeweils eine Stirnseite des Halteprofils Teil einer vormontierten Funktionseinheit. Dadurch ist es möglich, die Ausgleichselemente gemeinsam mit den Halteteilen, die den Sitz in den jeweiligen fahrzeugfesten Halterungen gewährleisten, vorzumontieren und stirnseitig in die vorzugsweise als Hohlprofile gestalteten Halteprofile einzusetzen. Eine entsprechende, vormontierte Funktionseinheit umfasst somit sowohl die Ausgleichsfunktionen in Längsrichtung und/oder in Querrichtung des Flächengebildes als auch Haltefunktionen zur Festlegung der Halteprofile in den fahrzeugfesten Halterungen.

In weiterer Ausgestaltung der Erfindung ist der dem Halteprofil gegenüberliegende Stirnendbereich des Flächengebildes mit einem formstabilen Auszugprofil verbunden, das in weiteren, von den ersten fahrzeugfesten Halterungen abliegenden, fahrzeugseitigen Aufnahmen lösbar gehalten ist. Das weitere Halteprofil in Form des Auszugprofils kann ohne Ausgleichsfunktion gestaltet sein. Es ist aber auch möglich, auch dieses gegenüberliegende Auszugprofil mit erfindungsgemäßen Ausgleichselementen in Längsrichtung und/oder in Querrichtung zu versehen. Vorzugsweise ist bei einem von einem Heckbereich aus zugänglichen Laderaum der in normaler Fahrtrichtung gesehen vordere Stirnendbereich des Flächengebildes mit einem mit Ausgleichselementen im Sinne der Erfindung versehenen Halteprofil ausgestattet. Das dem Heckbereich zugewandte, hintere Auszugprofil hingegen weist keine Ausgleichsfunktionen auf. Dieses Auszugprofil wird üblicherweise von einer Bedienperson aus den heckseitigen Halterungen ausgehängt und im Bereich des vorderen Halteprofils wieder eingehängt oder in anderer Art und Weise positioniert, um einen freien Zugang auf den Laderaum zu erhalten. In gleicher Weise wird das Auszugprofil anschließend von der entsprechenden Bedienperson wieder in den heckseitigen Halterungen eingehängt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung einen Teilbereich einer Ausführungsform einer erfindungsgemäßen Laderaumabdeckung und
- Fig. 2: in vergrößerter perspektivischer Darstellung einen Stirnendbereich eines Halteprofils der Laderaumabdeckung nach Fig. 1.

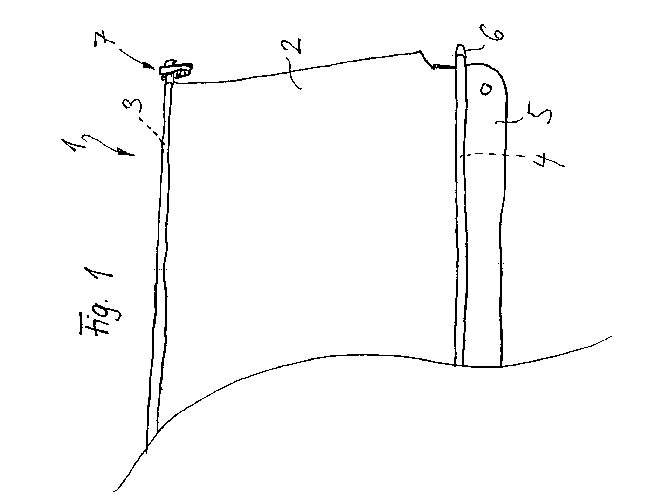

Eine Laderaumabdeckung 1 nach Fig. 1 weist ein flexibles Flächengebilde 2 auf, das in Form einer Textil- oder Kunststoffplane ausgeführt ist. Eine Länge des Flächengebildes 2 ist etwa so bemessen, dass das Flächengebilde 2 sich in einer Funktionsposition, in der es sich etwa horizontal über einen Laderaum eines Kraftfahrzeugs erstreckt, nahezu die gesamte Länge und nahezu die gesamte Breite des Laderaumes überdeckt. Das Flächengebilde ist an einem in Fahrzeuglängsrichtung vorderen Stirnendbereich mit einem Halteprofil 3 versehen. Das Flächengebilde 2 ist fest mit dem Halteprofil 3 verbunden, indem es vorzugsweise um das Halteprofil 3 herumgeschlungen und im Bereich des Halteprofils vernäht ist. Alternativ kann ein entsprechender Stirnendbereich des Flächengebildes 2 auch mit einem Keder versehen sein, der in eine entsprechende Kedernut oder eine Hohlkehle des Halteprofils 3 eingreift und so die Befestigung an dem Halteprofil 3 erzielt.

Ein in Fahrzeuglängsrichtung rückseitiger Stirnendbereich des Flächengebildes 2 ist mit einem Auszugprofil 4 verbunden, das - wie auch das Halteprofil 3 - formstabil ausgeführt ist. An das Auszugprofil 4 schließt ein formstabiles Konturteil 5 an.

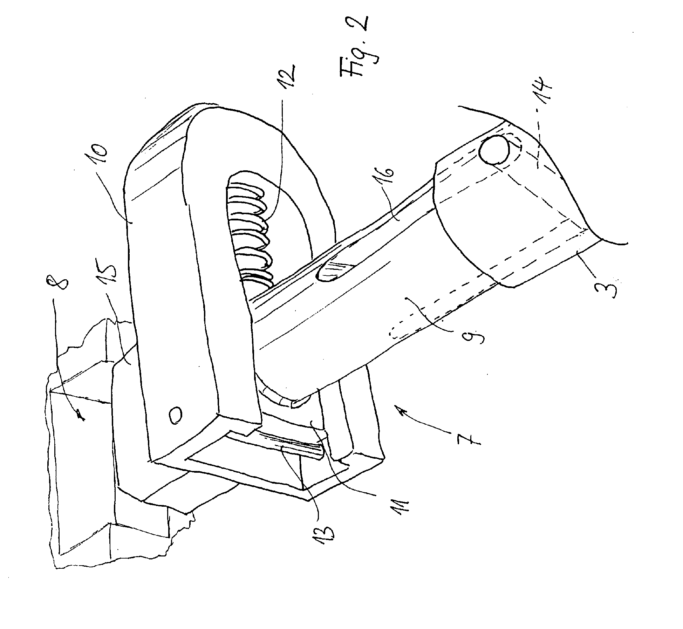

Das Halteprofil 3 ist an seinen gegenüberliegenden Stirnrandabschnitten mit jeweils einer Funktionseinheit 7 versehen, wobei in den Fig. 1 und 2 lediglich die in Fahrtrichtung gesehen rechte Funktionseinheit 7 dargestellt ist. Die insgesamt linke Seite der Laderaumabdeckung 1 ist analog zur rechten Seite in spiegelsymmetrischer Ausführung gestaltet. Es erschien daher entbehrlich, auch die linke Seite in den Fig. 1 und 2 darzustellen.

Den Funktionseinheiten 7 des Halteprofils 3 sind fahrzeugseitige Halterungen 8 zugeordnet (Fig. 2), die als Aussparungen ausgeführt sind. In die Aussparungen 8 sind die Funktionseinheiten 7 - je nach Ausführung der Aussparungen 8 - von oben her oder in Fahrzeugquerrichtung einsetzbar, wie nachfolgend noch näher ausgeführt werden wird.

Das Auszugprofil 4 ist an seinen gegenüberliegenden Stirnrandbereichen mit einfachen Zapfen 6 versehen, die in grundsätzlich bekannter Weise in fahrzeugseitige Einhängungen im Heckbereich des Kraftfahrzeugs einhängbar sind.

Das Halteprofil 3 ist als zylindrisches Hohlprofil ausgeführt, das an seinen gegenüberliegenden Stirnseiten offen ist. In das Hohlprofil 3 ist ein Teleskopstangenabschnitt 9 koaxial eingefügt, der mit einem in Querrichtung des Flächengebildes und damit in Längserstreckung des Halteprofils 3 versehenen und über seine Dicke durchgängigen Längsschlitz 16 versehen ist. Das Halteprofil 3 ist mit einem Endanschlag in Form eines Anschlagbolzens 14 versehen, der den Längsschlitz 16 durchdringt und so die Teleskopierbarkeit des Teleskopabschnittes 9 relativ zu dem Halteprofil 3 begrenzt. Der Teleskopabschnitt 9 ist in dem Halteprofil 3 über die Länge des Längsschlitzes 16 linear verschiebbar geführt.

Der stangenförmige Teleskopabschnitt 9 ist an seinem vom Halteprofil 3 abgewandten Stirnendbereich mit einem Kulissenstein 11 versehen, der als gleitbewegliches Schlittenelement innerhalb eines Führungsschienenabschnittes 10 gestaltet ist. Der Kulissenstein 11 ist in einer entsprechenden, zum Halteprofil 3 hin offenen Führungsnut des Führungsabschnittes 10 in Längsrichtung des Flächengebildes und damit auch in Fahrzeuglängsrichtung begrenzt linear verschiebbar. Der Führungsabschnitt 10 ist als einstückiger Gehäuseteil ausgeführt, der an einem Ende geschlossen ist, so dass die Führungsnut durch einen entsprechenden Randbereich an diesem einen Ende begrenzt ist. Die Führungsnut des Führungsgehäuses 10 ist zu der gegenüberliegenden Seite hin offen, wie anhand der Fig. 2 erkennbar ist. Der Kulissenstein 11 ist in Richtung des offenen Bereiches der Führungsnut durch einen Anschlagbolzen 13 begrenzt, der in dem Führungsgehäuse 10 in Hochrichtung ausgerichtet und in dem Führungsgehäuse 10 befestigt ist. Dadurch kann der Kulissenstein 11 zwischen dem als Endanschlag dienenden Anschlagbolzen 13 und dem rückseitigen Randbereich des Führungsgehäuses 10 in Längsrichtung des Flächengebildes und damit auch in Fahrzeuglängsrichtung verschoben werden. Der Kulissenstein 11 ist permanent federbeaufschlagt durch eine Schraubenfeder 12, die eine Federdruckkraft in Längsrichtung des Flächengebildes ausübt und sich einerseits am Kulissenstein 11 und andererseits am Randbereich des Führungsgehäuses 10 abstützt. Die Schraubendruckfeder 12 ist derart gestaltet, dass sie den Kulissenstein 11 in unbelasteter Stellung spielfrei am Endanschlag 13 hält.

Auch der Teleskopabschnitt 9 kann in nicht näher dargestellter Weise durch Federkraft in axialer Richtung beaufschlagt sein, um vorzugsweise permanent axial nach außen belastet zu sein.

Das Führungsgehäuse 10 weist auf der dem Teleskopabschnitt 9 bzw. der Führungsnut gegenüberliegenden Außenseite einen quaderartigen Halteblock 15 auf, der einstückig an dem Führungsgehäuse 10 angeformt ist und in Fahrzeugquerrichtung von dem Führungsgehäuse 10 nach außen abragt. Dem Halteblock 15 ist als fahrzeugseitige Halterung im Bereich einer Seitenwandung des Laderaumes des Kraftfahrzeugs eine Aussparung 8 zugeordnet, die auf die Außenabmessungen des Halteblockes 15 abgestimmt ist. Beim dargestellten Ausführungsbeispiel ist die Aussparung 8 nach oben offen ausgeführt, so dass der Halteblock 15 von oben her in die Aussparung eingesetzt werden kann.

Bei einem nicht dargestellten Ausführungsbeispiel der Erfindung ist die Aussparung 8 lediglich zur Laderaummitte hin offen, so dass sich eine lediglich zum Halteblock 15 hin offene, quaderartige Tasche ergibt, in die der Halteblock 15 in Querrichtung eingesetzt oder eingesteckt werden kann. Dadurch, dass die Aussparung 8 auf die Abmessungen des Halteblockes 15 abgestimmt ist, sitzt der Halteblock 15 formschlüssig in der Aussparung 8. Er kann lediglich durch Herausziehen in Querrichtung des Flächengebildes, d.h. in Längserstreckung des Halteprofils 3, wieder herausgezogen werden.

Die Funktionseinheit 7 weist somit mit dem Führungsgehäuse 10, dem Teleskopabschnitt 9, dem Kulissenstein 11 und dem Halteblock 15 mehrere Funktionen auf. Mittels des Teleskopabschnittes 9 ist die Länge des Halteprofils 3 bzw. die Lage des Halteblockes 15 - in Längserstreckung des Halteprofils 3 gesehen - relativ zum Halteprofil veränderbar. Dadurch können auch gegenüberliegende fahrzeugseitige Halterungen, die etwas weiter voneinander entfernt sind als andere fahrzeugseitige Aussparungen, noch zu einem sicheren Eintauchen des jeweiligen Halteblockes 15 der Funktionseinheit 7 und demzufolge zu einer sicheren Arretierung des Halteprofils 3 in den fahrzeugseitigen Halterungen führen. In montiertem Zustand des Führungsgehäuses 10, d.h. in in die Aussparung 8 eingesetzter Position des Halteblockes 15, ist das Führungsgehäuse 10 stationär gehalten, wohingegen der Kulissenstein 11 in Längsrichtung des Flächengebildes und damit auch in Fahrzeuglängsrichtung begrenzt längsverschiebbar ist. Hierdurch ist eine Spannung des Flächengebildes 2 in ausgestreckter Funktionsposition erreichbar. Ein Toleranzausgleich in Längsrichtung des Flächengebildes 2 ist ermöglicht. Der am Führungsgehäuse 10 angeformte oder in anderer Art und Weise dort starr befestigte Halteblock 15 schließlich dient als Haltefunktion für das Halteprofil 3, um die Arretierung in den fahrzeugseitigen Halterungen zu ermöglichen. Die Funktionseinheit 7 besitzt somit insgesamt eine Dreifachfunktion.

Die Längsbeweglichkeit des Teleskopabschnittes 9 dient in umgekehrter Weise auch dazu, das Halteprofil 3 aus den fahrzeugseitigen Halterungen wieder entnehmen zu können. Hierzu können die beiden Funktionseinheiten 7 der gegenüberliegenden Stirnendbereiche des Halteprofils 3 in einfacher Weise gegen die auf die Teleskopabschnitte 9 nach außen wirkende Federkraft nach innen gedrückt und aus den fahrzeugseitigen Halterungen 8 entnommen werden.

Es ist möglich, die Funktionseinheit 7 vorzumontieren und anschließend jede Funktionseinheit 7 in den offenen Stirnseitenbereich des Halteprofils 3 einzuschieben. Nach dem Einschieben wird in einfacher Weise der Anschlagbolzen 14 durch das Halteprofil 3 und den Längsschlitz hindurchgesteckt und im Halteprofil 3 arretiert. Dadurch ist die Funktionseinheit 7 am Halteprofil 3 gehalten. Falls der Teleskopabschnitt 9 mit einer zusätzlichen Federkraft beaufschlagt ist, wird vorzugsweise das entsprechende Federelement, dem eine eigene Abstützung innerhalb des Halteprofils 3 zugeordnet ist, vor dem Einsetzen des Teleskopabschnittes 9 in das Halteprofil 3 eingesetzt. Durch das anschließende Einschieben des Teleskopabschnittes 9 wird das Federelement auf Druck belastet, so dass es permanent versucht, den Teleskopabschnitt 9 nach außen zu drücken.

Nach dem Einsetzen der Funktionseinheiten 7 in die fahrzeugseitigen Halterungen ist die Laderaumabdeckung 1 funktionsfähig. Das zum Heckbereich gewandte Auszugprofil 4 kann in einfacher Weise von Hand ergriffen und entweder im Bereich der Funktionseinheiten 7 bzw. im Bereich entsprechender fahrzeugseitiger Halterungen positioniert werden, so dass das Flächengebilde 2 in einer einfachen Schlaufe nach unten fällt. Alternativ kann das Flächengebilde 2 in seine aufgespannte Funktionsposition überführt werden. Hierzu wird der Konturteil 5 einschließlich des Auszugprofiles 4 ergriffen und zum Heckbereich nach hinten gezogen, bis die Haltezapfen 6 des Auszugprofiles 4 in die entsprechenden Einhängungen eingehängt werden können. Falls das Flächengebilde 2 aus dieser etwa horizontal aufgespannten Funktionsposition wieder in seine schlaff nach unten hängende Ruheposition zurückgeführt werden soll, wird das Auszugprofil 4 mit seinen Haltezapfen 6 in einfacher Weise wieder aus den fahrzeugseitigen Einhängungen herausgenommen. Vorzugsweise ist der Abstand der fahrzeugseitigen Einhängungen zu den fahrzeugseitigen Aussparungen 8 für die Funktionseinheiten 7 so bemessen, dass beim Einhängen der Haltezapfen 6 das Flächengebilde 2 in Fahrzeuglängsrichtung gespannt werden muss. Dadurch zieht das Flächengebilde das Halteprofil 3 in Fahrzeuglängsrichtung nach hinten, wodurch über die Teleskopabschnitte 9 und die Kulissensteine 11 auf beiden Seiten die Schraubendruckfedern 12 belastet werden. Die Ausgleichsmöglichkeit in Fahrzeuglängsrichtung ist auch vorteilhaft, falls die Länge des Flächengebildes 2 an seinen gegenüberliegenden Seitenrändern nicht gleich groß ist, oder, falls die Abstände der fahrzeugseitigen Einhängungen zu den fahrzeugseitigen Aussparungen 8 für die Funktionseinheiten 7 auf beiden Fahrzeugseiten nicht exakt gleich groß sind.

## Patentansprüche

1. Laderaumabdeckung für ein Kraftfahrzeug mit einem flexiblen Flächengebilde, das an wenigstens einem Stirnendbereich mit jeweils einem sich quer zur Längsrichtung des Flächengebildes erstreckenden, formstabilen Halteprofil verbunden ist, das in fahrzeugfesten Halterungen lösbar angeordnet ist, **dadurch gekennzeichnet, dass** das Halteprofil (3) stirnseitige Ausgleichselemente (9 bis 11) im Bereich der fahrzeugfesten Halterungen (8) aufweist, durch die der wenigstens eine Stirnendbereich des Flächengebildes (2) in Querrichtung und/oder in Längsrichtung begrenzt verlagerbar ist.

2. Laderaumabdeckung **dadurch gekennzeichnet, dass** den Ausgleichselementen (9 bis 11) jeweils Endanschläge (13, 14) sowie Federbelastungsmittel (12) zugeordnet sind, die das zugeordnete Ausgleichselement (9, 11) in wenigstens eine Richtung mit Federkraft beaufschlagen und in unbelastetem Zustand an dem jeweiligen Endanschlag halten.

3. Laderaumabdeckung nach Anspruch 1, **dadurch gekennzeichnet, dass** die Ausgleichselemente in Querrichtung des Flächengebildes (2) eines Teleskop-Profilabschnitt (9) umfassen.

4. Laderaumabdeckung nach Anspruch 1, **dadurch gekennzeichnet, dass** die Ausgleichselemente in Längsrichtung des Flächengebildes (2) einen stationär zu den fahrzeugfesten Halterungen (8) gehaltenen Längsführungsabschnitt (10) sowie einen am Stirnendbereich fest angeordneten und relativ zu dem Längsführungsabschnitt (10) begrenzt längsbeweglichen Schlittenabschnitt (11) aufweisen.

5. Laderaumabdeckung nach Anspruch 1, **dadurch gekennzeichnet, dass** die Ausgleichselemente (9 bis 11) für jeweils eine Stirnseite des Halteprofils (3) Teil einer vormontierten Funktionseinheit sind.

6. Laderaumabdeckung nach Anspruch 1, **dadurch gekennzeichnet, dass** der dem Halteprofil (3) gegenüberliegende Stirnendbereich des Flächengebildes (2) mit einem formstabilen Auszugprofil (4) verbunden ist, das in weiteren, von den ersten fahrzeugfesten Halterungen abliegenden, fahrzeugseitigen Aufnahmen lösbar gehalten ist.

7. Laderaumabdeckung nach Anspruch 6, **dadurch gekennzeichnet, dass** das Auszugprofil als Halteprofil mit Ausgleichselementen gemäß wenigstens einem der vorhergehenden Ansprüche gestaltet ist.
